# EUROPÄISCHE PATENTSCHRIFT

(11) **EP 3 378 577 B1**
(45) Veröffentlichungstag und Bekanntmachung des Hinweises auf die Patenterteilung: **27.11.2019**
(21) Anmeldenummer: 18163143.3
(22) Anmeldetag: 21.03.2018
(51) Int. Cl.: B21B 31/08, F16D 1/092

(54) **HYDRAULISCHE SPANNVORRICHTUNG FÜR DIE DEMONTIERBARE, REIBSCHLÜSSIGE VERBINDUNG ZWEIER BAUTEILE**
HYDRAULIC CLAMPING DEVICE FOR DEMOUNTABLE, FRICTIONALLY ENGAGED CONNECTION BETWEEN TWO COMPONENTS
DISPOSITIF DE SERRAGE HYDRAULIQUE POUR RACCORDEMENT FRICTIONNEL DÉMONTABLE DE DEUX COMPOSANTS

(30) Priorität: 22.03.2017 DE 102017106210
(43) Veröffentlichungstag der Anmeldung: 26.09.2018
(73) Patentinhaber: Köllges, Ralf, 41812 Erkelenz (DE)
(72) Erfinder: Köllges, Ralf, 41812 Erkelenz (DE)
(74) Vertreter: Patentanwälte Bauer Vorberg Kayser

(56) Entgegenhaltungen:
- EP-A1- 0 455 082
- EP-A2- 0 342 179
- WO-A1-03/090947

## Beschreibung

Die Erfindung bezieht sich auf eine hydraulische Spannvorrichtung für die demontierbare, reibschlüssige Verbindung eines ersten Bauteils mit einem zweiten Bauteil, wobei das erste Bauteil eine Hauptbohrung aufweist, die eine Zentralachse definiert, wobei das erste Bauteil einen zylindrischen ersten Anlagebereich aufweist, das zweite Bauteil einen zylindrischen zweiten Anlagebereich aufweist, der denselben Durchmesser wie der erste Anlagebereich hat und mit diesem fluchtet, und eine Anordnung aus einem Kegelbolzen und einer Konushülse, die eine dem Kegelbolzen angepasste innere Konusfläche aufweist, innerhalb der beiden Anlagebereiche radial expandiert wird. Dies geschieht mithilfe eines hydraulischen Spannwerkzeugs.

Aus WO 03/090947 A1 ist eine hydraulische Spannvorrichtung für die demontierbare, reibschlüssige Verbindung eines Walzrings auf einer Welle eines Walzgerüstes bekannt. Die Welle weist einen konischen Aufnahmebereich in Form eines Kegelbolzens, der eine Zentralachse definiert, und eine Kontaktfläche auf, die sich in einer Ebene rechtwinklig zur Zentralachse erstreckt. Der Walzring hat eine Hauptbohrung, die einen zylindrischen ersten Anlagebereich ausbildet. Der Walzring liegt mit einer hinteren Radialfläche an der Kontaktfläche an und weist eine vordere Radialfläche auf. Die Spannvorrichtung weist zudem die folgenden Merkmale auf: Am Kegelbolzen sind in dieser Reihenfolge hintereinander angeordnet a) ein hinteres Außengewinde, b) der konische Aufnahmebereich und c) ein Zwischenbereich. Eine Konushülse ist zwischen dem konischen Aufnahmebereich und der Hauptbohrung angeordnet, sie weist eine dem konischen Aufnahmebereich angepasste innere Konusfläche, eine der Hauptbohrung angepasste äußere Zylinderfläche und eine äußere Radialfläche auf. Eine Mutter, die ein Innengewinde hat, das dem hinteren Außengewinde entspricht, hat eine mit der vorderen Radialfläche zusammenwirkende Mutterfläche und eine Anzahl von axialen Stiftbohrungen, in denen jeweils ein Druckstift angeordnet ist, welche Druckstifte mit einem inneren Endbereich in Anlage an die äußere Radialfläche kommen. Ein hydraulisches Spannwerkzeug hat ein erstes Spannmittel, welches eine axiale Spannkraft zwischen dem hinteren Außengewinde und der vorderen Radialfläche erzeugt, und ein zweites Spannmittel, das eine axiale Druckkraft auf die Druckstifte erzeugt und sich am hinteren Außengewinde abstützt.

Aus US 4,650,364 ist eine Anordnung vorbekannt, bei der ein Bauteil als Walzring ausgeführt ist, der im Wesentlichen durch radiale Spannung am zweiten Bauteil fixiert wird. Das zweite Bauteil wird durch eine Welle gebildet. Die radiale Spannung ist ausreichend hoch für die Übertragung eines für einen Walzvorgang nötigen Drehmoments zwischen der Welle und dem Walzring gewählt. Bei derartigen Walzringanordnungen wird der Walzring relativ stark auf Zug beansprucht.

EP 343 440 B und DE 201 08 915 U zeigen hydraulische Spannvorrichtungen, bei denen ebenfalls ein Walzring das eine Bauteil bildet. Er ist an einer Welle eines Walzgerüsts befestigt ist. Der Walzring wird dabei im Wesentlichen durch axiale Arbeitsspannung gespannt. Für die Zentrierung in radialer Richtung ist ein Ringkonus vorgesehen. Dieser wird von derselben einzigen hydraulischen Spannvorrichtung betätigt, die auch für die axiale Spannung zuständig ist. Ein unabhängiges radiales Spannen bzw. Ausrichten und axiales Spannen ist damit nicht möglich. Es ist auch nicht möglich, das hydraulische Spannwerkzeug nach erfolgtem Aufbringen der Arbeitsspannung von der Welle abzunehmen und beispielsweise für eine andere Walzringanordnung einzusetzen. Weiterhin wird auf DE 3 834 606 A verwiesen.

Der Erfindung liegt die Aufgabe zugrunde, die Spannvorrichtungen nach dem Stand der Technik weiterzubilden und eine Spannvorrichtung anzugeben, bei der die axiale und die radiale Spannkraft in einem gewissen Verhältnis zueinander eingestellt und vorgegeben werden können, so dass gezielt Anforderungen der Industrie nachgekommen werden kann, die konkret eine axiale und eine radiale Spannkraft vorgibt.

Diese Aufgabe wird gelöst durch eine hydraulische Spannvorrichtung für die demontierbare, reibschlüssige Verbindung eines ersten Bauteils mit einem zweiten Bauteil, wobei
- das erste Bauteil eine Hauptbohrung aufweist, die eine Zentralachse definiert, wobei das erste Bauteil eine Kontaktfläche aufweist, die sich in einer Ebene rechtwinklig zur Zentralachse und um die Mündung der Hauptbohrung erstreckt, und wobei die Hauptbohrung ausgehend von der Mündung einen zylindrischen ersten Anlagebereich und dahinter ein hinteres Innengewinde aufweist,
- das zweite Bauteil mit einer hinteren Radialfläche an der Kontaktfläche anliegt, einen zylindrischen zweiten Anlagebereich aufweist, der denselben Durchmesser wie der erste Anlagebereich hat und mit diesem fluchtet, und eine vordere Radialfläche aufweist,
und die Spannvorrichtung zudem aufweist
- einen Kegelbolzen, der in dieser Reihenfolge hintereinander angeordnet aufweist a) ein hinteres Außengewinde, das dem hinteren Innengewinde entspricht, b) einen Kegelbereich, c) einen Zwischenbereich und d) mindestens einen äußeren Gewindebereich,
- eine Konushülse, die eine dem Kegelbereich angepasste innere Konusfläche, eine äußere Zylinderfläche und eine äußere Radialfläche aufweist,
- eine Mutter, die ein Innengewinde hat, das dem äußeren Gewindebereich entspricht, die eine mit der vorderen Radialfläche zusammenwirkende Mutterfläche hat, und die eine Anzahl von axialen Stiftbohrungen aufweist, in denen jeweils ein Druckstift angeordnet ist, welche mit einem inneren Endbereich in Anlage an die äußere Radialfläche kommen, und
- ein hydraulisches Spannwerkzeug, das ein erstes Spannmittel aufweist, welches eine axiale Spannkraft zwischen dem äußeren Gewindebereich und der vorderen Radialfläche erzeugt, und das ein zweites Spannmittel aufweist, dass eine axiale Druckkraft auf die Druckstifte erzeugt und sich an am äußeren Gewindebereich abstützt.

Diese hydraulische Spannvorrichtung hält im gespannten Zustand einerseits die beiden Bauteile in Verbindung und andererseits zentriert sie die beiden Anlagebereiche. Das erste Bauteil hat mindestens eine Sackbohrung, das zweite Bauteil hat eine durchgehende Bohrung. Beide Bauteile können beliebige Form annehmen. Das erste Bauteil kann eine Platte, ein prismatischer Körper, ein Flansch oder dergleichen sein. Gleiches gilt für das zweite Bauteil. Es ist vorteilhaft, wenn beide Bauteile aus demselben Material gefertigt sind.

Das hintere Innengewinde dient dazu, den Kegelbolzen im ersten Bauteil lösbar axial zu fixieren. Der Kegelbolzen wird mit seinem hinteren Außengewinde in das hintere Innengewinde des ersten Bauteils eingeschraubt. Diese beiden Gewinde sind zentrisch zur Zentralachse. Der Kegelbolzen ist als dehnbarer Bolzen ausgelegt, er wird mittels des hydraulischen Spannwerkzeugs zwischen seinem hinteren Außengewinde und dem äußeren Gewindebereich in die Länge gezogen, dadurch wird die axiale Spannung erreicht. Diese ist, nach Entfernen des hydraulischen Spannwerkzeugs, von der Mutter gesichert.

Das Aufschieben der Konushülse auf den Kegelbereich erfolgt durch das hydraulische Spannwerkzeug. Dessen zweites Spannmittel übt eine axiale Druckkraft über die Druckstifte auf die vordere Radialfläche der Konushülse aus. Es ist möglich, den Raum zwischen Konushülse und Kegelbolzen mit Öl zu füllen, es kann jedoch auch trocken, ohne Öl gearbeitet werden. Es ist vorteilhaft, die äußere Zylinderfläche der Konushülse mit einer die Reibung erhöhenden Beschichtung zu versehen, insbesondere mit einem Haftreibungskoeffizienten größer 0,5, vorzugsweise größer 0,8 und insbesondere oberhalb von 1.

In einer bevorzugten Weiterbildung liegt das Maß der radialen Kraft zwischen der äußeren Zylinderfläche und den zylindrischen Anlagebereichen im Bereich von 5 bis 20 % der axialen Kraft zwischen diesen beiden Bauteilen.

Vorzugsweise ist die Hauptbohrung eine Sackbohrung. Vorzugsweise erweitert sich der Kegelbereich in Richtung zum hinteren Außengewinde hin. Vorzugsweise weist die Konushülse an ihrem vorderen Ende einen Innengewindebereich auf. Vorzugsweise bleibt zwischen diesem Innengewindebereich und dem Zwischenbereich ein Ringraum frei, der von außen axial zugänglich ist. Vorzugsweise weist die Spannvorrichtung weiterhin ein hydraulisches Lösewerkzeug auf, das eine axiale Zugkraft zwischen dem Innengewindebereich und der vorderen Radialfläche bereitstellt.

Vorzugsweise befindet sich im gespannten Zustand zwischen der Kontaktfläche und der Buchse ein Luftspalt, der beispielsweise kleiner als 0,5 mm ist, insbesondere kleiner 0,2 mm und vorzugsweise kleiner 0,05 mm ist, aber >0 ist. Vorzugsweise ist das zweite Bauteil durch eine Buchse und zwei nebeneinander auf der Buchse angeordnete Membranen gebildet. Vorzugsweise weist der Kegelbereich einen Auslass für Öl auf, der mit einer Ölbohrung verbunden ist, die an einer vorderen Stirnfläche des Kegelbolzens mündet. Der Auslass ist vorzugsweise als schraubenlinienförmig umlaufende Nut ausgebildet.

Vorzugsweise weist die Spannvorrichtung weiterhin eine Zentriervorrichtung auf, die
- einen Zentrierbolzen aufweist, der in dieser Reihenfolge hintereinander angeordnet aufweist a) ein hinteres Zentrieraußengewinde, das dem hinteren Innengewinde entspricht, b) einen zylindrischen Axialbereich und c) ein endseitiges Gewinde,
- eine Außenkonushülse, die mit einer Innenbohrung auf dem Zentrierbolzen gleitend geführt ist und ein Anschlussmittel aufweist,
- eine Innenkonushülse hat, die sich radial außerhalb der Außenkonushülse befindet, die einen axialen Längsschlitz, ein Haltemittel und eine der äußeren Zylinderfläche entsprechende äußere Mantelfläche aufweist, und
- ein hydraulisches Zentrierwerkzeug aufweist, das sich einerseits an der vorderen Radialfläche und andererseits am endseitigen Gewinde abstützt, eine Aufnahme für das Haltemittel ausbildet und einen Anschlussbereich aufweist, der mit dem Anschlussmittel lösbar verbunden ist und der wahlweise in die eine oder in die andere axiale Richtung durch das hydraulische Zentrierwerkzeug verschoben wird. Vorzugsweise ist das erste Bauteil ein Flansch, der eine Vielzahl von auf einem Teilkreis angeordneten Hauptbohrungen aufweist. Vorzugsweise ist das zweite Bauteil eine ringförmige Membran, die eine Vielzahl von auf einem Teilkreis angeordneten Löchern aufweist.

Ein Ausführungsbeispiel der Erfindung wird im Folgenden näher erläutert. Dieses Ausführungsbeispiel ist nicht einschränkend zu verstehen. Es zeigt einen Weg, wie die Erfindung ausführbar ist. Damit sind andere Konstruktionen nicht ausgeschlossen. Das Ausführungsbeispiel wird unter Bezugnahme auf die Zeichnung näher erläutert, in dieser Zeichnung zeigen:
- Fig. 1:: einen Schnitt in der Axialebene durch die Spannvorrichtung mit einem ersten Bauteil und einem zweiten Bauteil sowie einem hydraulischen Spannwerkzeug (70),
- Fig. 2:: ein Detail aus Figur 1, nämlich der dort gezeigte Kegelbolzen, die Konushülse und die Mutter,
- Fig. 3:: einen Axialschnitt ähnlich Figur 1 jedoch nun mit einer Zentriervorrichtung, mit dem ersten Bauteil und dem zweiten Bauteil, gezeigt ist der Zustand vor dem Zentrieren,
- Fig. 4:: eine Darstellung wie Figur 3, jedoch nun im Zustand nach dem Zentrieren, und
- Fig. 5:: einen Axialschnitt ähnlich Fig. 1, jedoch nun mit einem Lösewerkzeug anstatt des Spannwerkzeugs.

In den Zeichnungen ist ein erstes Bauteil 20 gezeigt, das durch einen Flansch gebildet wird, der eine Vielzahl von Hauptbohrungen 22 aufweist, die gleich verteilt um eine (nicht dargestellte) Drehachse des Flansches angeordnet sind. Von diesen Hauptbohrungen 22 ist nur eine einzige Hauptbohrung 22 in den Figuren dargestellt. Sie ist als Sackbohrung ausgeführt. Sie definiert eine Zentralachse 24. Die Hauptbohrung 22 hat eine Mündung, im Bereich dieser Mündung hat das erste Bauteil 20 eine Kontaktfläche 26. Sie ist normalerweise ringförmig. Sie befindet sich in einer Ebene rechtwinklig zur Zentralachse 24. Sie erstreckt sich um die Mündung der Hauptbohrung 22. Die Hauptbohrung 22 hat ausgehend von der Mündung einen zylindrischen ersten Anlagebereich 28 und dahinter ein hinteres Innengewinde 30.

Ein zweites Bauteil 32 wird durch die hydraulische Spannvorrichtung mit dem ersten Bauteil 20 demontierbar und reibschlüssig verbunden. Das zweite Bauteil 32 wird im Ausführungsbeispiel durch eine Buchse 34 und zwei Membranen 36, 38 realisiert. Letztere sind flexibel. Sie sind an ihrem Außenrand (nicht dargestellt) mit einem weiteren Flansch (nicht dargestellt) verbunden. Dieser weitere Flansch kann um eine Achse rotieren, die nicht mit der Rotationsachse des ersten Bauteils 20 übereinstimmt.

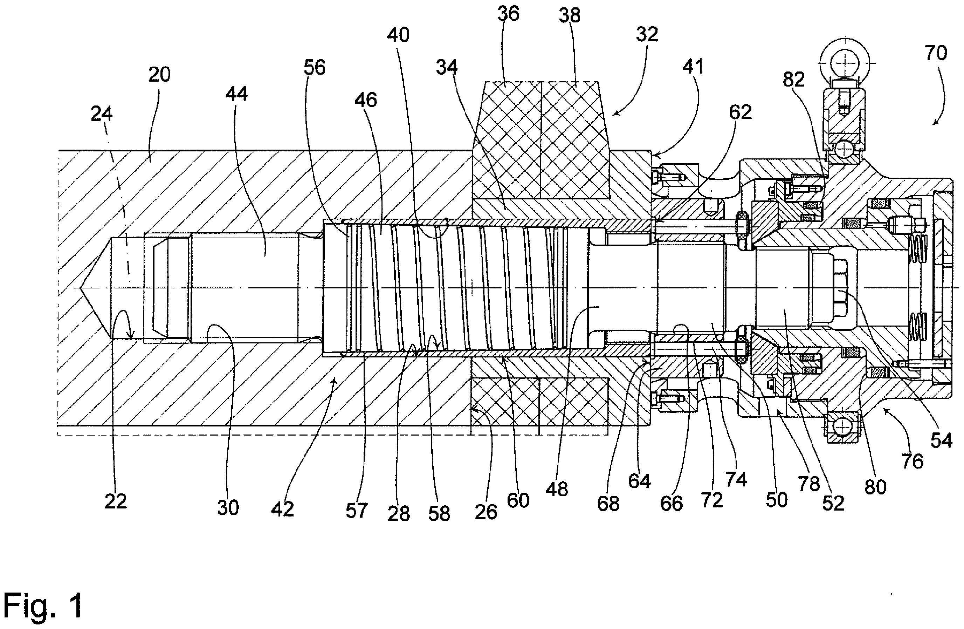

Die Membranen 36, 38 sind im Presssitz auf einer zylindrischen Außenfläche der Buchse 34 angeordnet. Die Buchse 34 ist im Querschnitt L-förmig, wie aus den Figuren ersichtlich. Die beiden Membranen 36, 38 sind in axialer Richtung geringfügig breiter als die darunter befindliche freie Länge des L-Schenkels. Im gespannten Zustand, wie ihn Figur 1 zeigt, liegt die in Figur 1 linke Membran 36 mit ihrer Seitenfläche an der Kontaktfläche 26 an. Zwischen der Kontaktfläche 26 und der Buchse 34 besteht ein Luftspalt, der relativ gering ist, aber eben nicht null ist. Er liegt beispielsweise im Bereich ≤ 0,5 mm, insbesondere ≤ 0,2 mm und vorzugsweise ≤ 0,05 mm. Im Ausführungsbeispiel ist es die Membran 36 des zweiten Bauteils, die mit einer hinteren Radialfläche an der Kontaktfläche 26 anliegt. Das zweite Bauteil 32 hat weiterhin einen zylindrischen, zweiten Anlagebereich 40, der denselben Durchmesser wie der erste Anlagebereich 28 hat und mit diesem gleichachsig ist. Dieser zylindrische, zweite Anlagebereich 40 wird durch die Buchse 34 realisiert. Das zweite Bauteil 32 hat auf jeden Fall eine Lochbohrung, die zentrisch zur Zentralachse 24 ist und die im Ausführungsbeispiel den zylindrischen, zweiten Anlagebereich 40 realisiert. Die mindestens eine Membran 36, 38 bildet das gespannte Teil.

Die eigentliche Spannvorrichtung, nämlich ohne die beiden Bauteile 20, 32, hat einen Kegelbolzen 42, der in dieser Reihenfolge hintereinander angeordnet i) ein hinteres Außengewinde 44, welches mit dem hinteren Innengewinde 30 zusammenwirkt, ii) einen Kegelbereich 46, der sich in Richtung größer werdender Entfernung vom hinteren Außengewinde 44 verjüngt, iii) einen Zwischenbereich 48, iv) einen ersten äußeren Gewindebereich 50 und v) einen zweiten äußeren Gewindebereich 52, der einen geringeren Außendurchmesser, nämlich einen etwa 5 bis 20% geringeren Außendurchmesser als der erste äußere Gewindebereich 50 aufweist. Es ist auch möglich, die beiden äußeren Gewindebereiche 50, 52 in einem durchgängigen Gewindebereich zu realisieren.

Im Kegelbolzen 42 ist eine Ölbohrung (nicht dargestellt) ausgebildet, sie mündet an einem rechten, äußeren Stirnende und ist dort durch eine Schraube 54 verschlossen, die Ölbohrung endet an der Peripherie des Kegelbereichs 46, dort ist eine schraubenlinienförmig umlaufende Nut 56 ausgebildet, die mit Öl unter hohem Druck gefüllt werden kann, wenn entsprechend über die Stirnseite Öl eingeleitet wird.

Weiterhin weist die eigentliche hydraulische Spannvorrichtung eine Konushülse 57 auf, die sich im Wesentlichen radial außerhalb des Kegelbereich 46 und des Zwischenbereichs 48 befindet. Sie hat eine dem Kegelbereich 46 angepasste innere Konusfläche 58, eine äußere Zylinderfläche 60 und eine äußere Radialfläche 62.

Auf den ersten äußeren Gewindebereich 50 ist eine Mutter 64 aufgeschraubt. Sie hat ein Innengewinde 66, das dem äußeren Gewindebereich 50 entspricht. Sie hat eine Mutterfläche 68, die mit der vorderen Radialfläche 41 der Buchse 34 zusammenwirkt und an dieser anliegt. Die Mutter 64 hat u.a. die Aufgabe, eine mittels eines Spannwerkzeugs 70 aufgebrachte Dehnung des Kegelbolzens 42 dauerhaft zu halten. Sie wird im gespannten Zustand des Spannwerkzeugs 70 und damit bei gedehntem Kegelbolzen 42 so weit gedreht, bis sie in ausreichender Anlage an der Buchse 34 ist, so dass sie die vom Spannwerkzeug 70 aufgebrachte axiale Spannkraft hält und übernimmt.

Die Mutter 64 hat eine Anzahl von axialen Stiftbohrungen 72. In jeder Stiftbohrung 72 befindet sich ein Druckstift 74, der eine Länge hat, die größer ist als die axiale Abmessung der Mutter 64. Wie Figur 1 zeigt, liegt ein innerer Anlagebereich 75, der sich am linken Ende der gezeigten Druckstifte 74 befindet, an der äußeren Radialfläche 62 an. Das andere Ende wird über das Spannwerkzeug 70 belastet und axial verschoben. Auf diese Weise kann die Konushülse 57 axial, konkret in der Figur 1 nach links verschoben und gedrückt werden. Dadurch wird eine radial wirkende Kraft erreicht. Die Konushülse 57 wird elastisch gedehnt und legt sich reibschlüssig mit ihrer äußeren Zylinderfläche 60 sowohl an den zylindrischen ersten Anlagebereich 28 als auch an den zylindrischen zweiten Anlagebereich 40 mit hoher axialer Kraft an. Dadurch werden diese Anlagebereiche 28, 40 reibschlüssig miteinander verbunden.

Die einzelnen Druckstifte 74 sind durch einen Ring miteinander verbunden, der sich außerhalb der Mutter 64 und in Nähe des äußeren Endbereichs der Druckstifte 74 befindet. Dadurch können die Druckstifte 74 gemeinsam gehandhabt werden, beispielsweise eingesteckt oder entnommen werden. Es ist möglich, dass die Druckstift 74 permanent, ohne entnommen werden zu können, der Mutter 64 zugeordnet sind.

Das hydraulische Spannwerkzeug 70 hat ein erstes Spannmittel 76, das eine axiale Spannkraft zwischen dem äußeren Gewindebereich, hier im Beispiel dem zweiten Gewindebereich 52, und der vorderen Radialfläche 41 erzeugt. Dieses erste Spannmittel 76 ist für die axiale Spannkraft zuständig. Das Spannwerkzeug 70 hat weiterhin ein zweites Spannmittel 78. Das zweite Spannmittel 78 erzeugt eine axiale Druckkraft auf die Druckstifte 74, es stützt sich dabei am äußeren Gewindebereich, hier am zweiten äußeren Gewindebereich 52 ab. Dieses zweite Spannmittel 78 ist für die axiale Verschiebung der Konushülse 57 relativ zum ortsfesten Kegelbereich 46 zuständig. Es ist somit für die radiale Spannkraft zuständig. Beide Spannmittel 76, 78 können unabhängig voneinander betätigt werden. Somit kann die axiale Spannkraft unabhängig von der radialen Spannkraft eingestellt werden. Vorzugsweise liegt die radiale Kraft im Bereich von 5 bis 20 % der axialen Kraft.

Jedes Spannmittel 76, 78 hat einen eigenen Hydraulikanschluss. Die Hydraulikanschlüsse sind aus dem Stand der Technik bekannt und hier nicht dargestellt. Der Hydraulikanschluss des ersten Spannmittels 76 ist in Verbindung mit einem ersten Kolbenraum 80. Der Hydraulikanschluss für das zweite Spannmittel 78 ist in Verbindung mit einem zweiten Kolbenraum 82.

Wenn der Spannvorgang abgeschlossen ist, wird das Spannwerkzeug 70 entnommen. Es wird vom zweiten äußeren Gewindebereich 52, auf den es mit einem Innengewinde aufgeschraubt ist, abgeschraubt. In diesem Zustand ist die Mutter 64 für das Aufrechterhalten der axialen Spannkraft zuständig. Über die Mutter 64 kann eine Schutzkappe (nicht dargestellt) gestülpt werden, die beispielsweise auf den zweiten äußeren Gewindebereich 52 aufgeschraubt ist und bis zum zweiten Bauteil 32 reicht.

Im Ausführungsbeispiel ist der Raum zwischen dem Kegelbereich 46 und der inneren Konusfläche 58 in axialer Richtung nicht abgedichtet. In einer Alternative können umlaufende Dichtungen im Bereich der axialen Enden der Konushülse 57 angeordnet sein. Derartige Dichtungen sind aus dem Stand der Technik bekannt. Es ist möglich, während des Spannvorgangs den genannten Raum mit Hydrauliköl unter hohem Druck zu füllen, dadurch sind geringere axiale Kräfte notwendig, um die Konushülse 57 gegenüber dem Kegelbereich 46 axial zu verschieben.

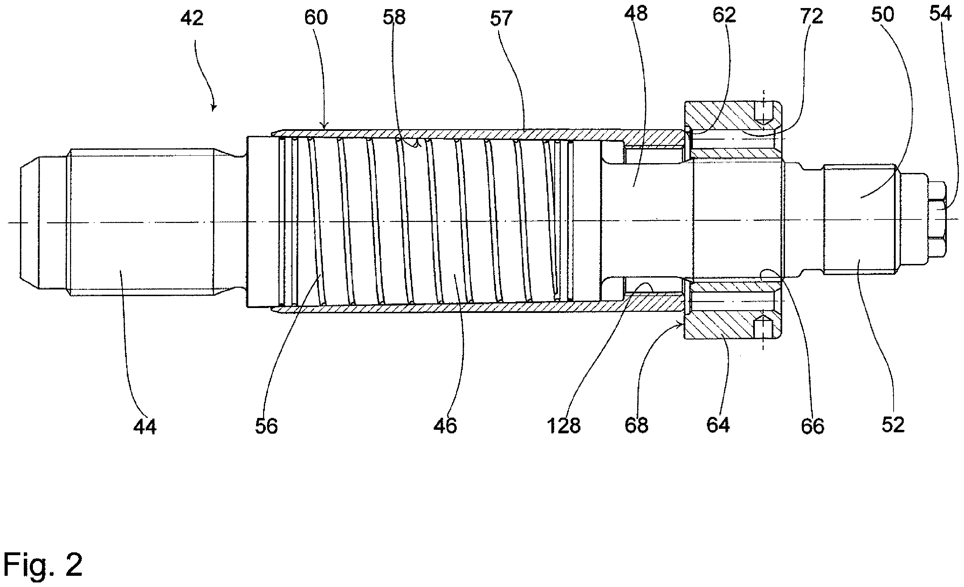

Für einen Spannvorgang wird zunächst die in Figur 2 gezeigte Anordnung in das erste Bauelement 20 eingeschraubt. Das zweite Bauelement 32, das ein Loch hat, das den zylindrischen zweiten Anlagebereich ausbildet, wird entweder mit diesem Loch über die Anordnung gefügt oder ist bereits in Nähe des ersten Bauelements 20 und die Anordnung ist durch das Loch geschoben worden. Das zweite Bauelement 32 kann einteilig sein, es kann aber auch aus mehreren Einzelteilen bestehen, die jeweils einen zylindrischen zweiten Anlagebereich 40 aufweisen. In einem ersten Schritt wird durch axiales Drücken der Konushülse 57 auf den Kegelbereich 46 und zwischen den Bohrungen ein Presssitz erzeugt. Anschließend wird der Kegelbolzen 42 in die Länge gezogen und die axiale Vorspannkraft im Kegelbolzens 42 erzeugt. Nach der Montage verbleiben die in Figur 2 gezeigten Bauteile vor Ort, die hydraulische Spannwerkzeug 70 kann entfernt werden.

Im praktischen Einsatz der hydraulischen Spannvorrichtung 70 kommt es immer wieder vor, dass anfänglich die beiden zylindrischen Anlagebereiche 28 und 40 nicht miteinander fluchtende Achsen haben, anders ausgedrückt, dass sich der zylindrische zweite Anlagebereich 40 mit seiner Achse nicht auf der Zentralachse 24 befindet. In diesem Fall ist das Einfügen der Teile der Spannvorrichtung, die in Figur 2 dargestellt sind, schwierig und in der Regel nicht möglich. Es muss zunächst eine Zentrierung durchgeführt werden. Hierzu wird eine Zentriervorrichtung eingesetzt, die ähnlich der eigentlichen Spannvorrichtung ist.

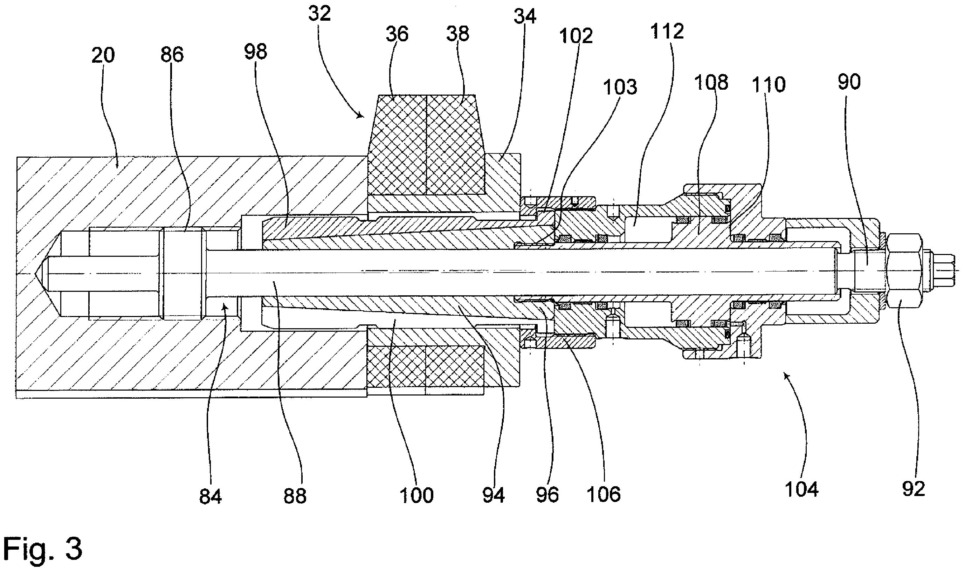

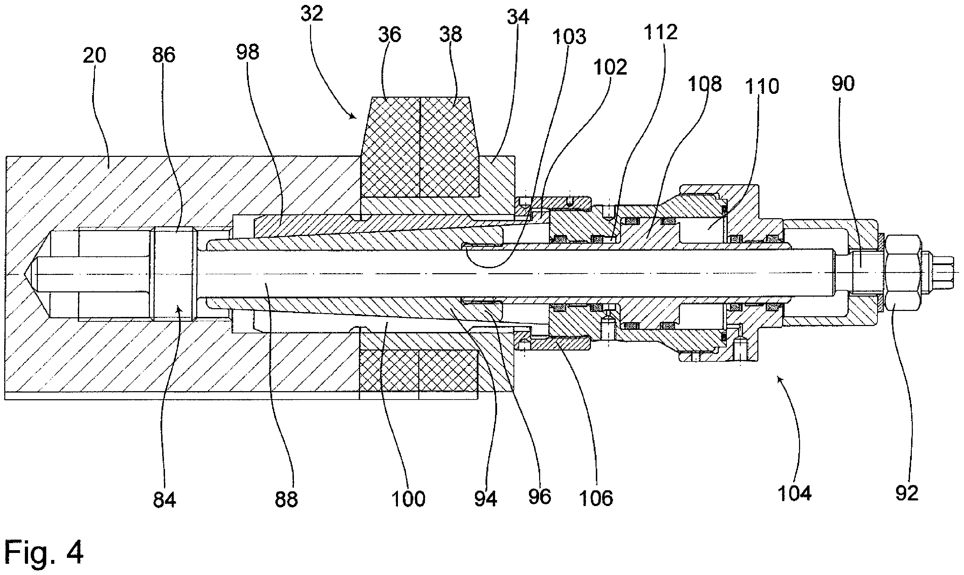

Figur 3 zeigt den Ausgangszustand, die beiden zylindrischen Anlagebereiche 28 und 40 fluchten nicht. Anstelle eines Kegelbolzens 42 werden ein Zentrierbolzen 84 und eine Außenkonushülse 94 verwendet. Der Zentrierbolzen 84 hat in dieser Reihenfolge hintereinander angeordnet i) ein hinteres Zentrieraußengewinde 86, das dieselbe Aufgabe wie das hintere Außengewinde 44 hat, nämlich mit dem hinteren Innengewinde 30 zusammenwirkt, wie Figuren 3 und 4 zeigen; ii) einen zylindrischen Axialbereich 88 und iii) ein endseitiges Gewinde 90. Auf dieses ist eine Endmutter 92 aufgeschraubt. Die Außenkonushülse 94 hat einen deutlich größeren Kegelwinkel, beispielsweise mindestens zweimal so großen Kegelwinkel wir der Kegelbereich 46. Die Außenkonushülse 94 ist entlang des zylindrischen Axialbereichs 88 verschiebbar und an diesem geführt. Die Außenkonushülse 94 hat ein Anschlussmittel 96 an ihrem außenseitigen Ende.

Die Außenkonushülse 94 wird von einer Innenkonushülse 98 umgriffen, die einen angepassten Konusbereich hat. Sie hat einen axialen Längsschlitz 100 und einen Haltebereich 102. Die Innenkonushülse 98 entspricht in ihrer Funktion der Konushülse 57. Aufgrund ihres Längsschlitzes 100 kann die Innenkonushülse 98 deutlich stärker radial expandiert werden als die Konushülse 57. Dies bedeutet, dass die Innenkonushülse 98 im Ausgangszustand, bei praktisch geschlossenem Längsschlitz 100, einen ausreichend kleinen Außendurchmesser hat, so dass auch bei versetzen zylindrischen Anlagebereichen 28, 40 ein Einfügen möglich ist. Im Ausgangszustand ist der Außendurchmesser der Innenkonushülse 98 so ausreichend klein, dass ein üblicher Versatz der beiden Anlagebereiche 28, 40 nicht das Einfügen der Einheit aus Zentrierbolzen 84, Außenkonushülse 94 und Innenkonushülse 98 behindert. Im Ausgangszustand ist der Außendurchmesser der Innenkonushülse 98 mindestens 3 %, insbesondere mindestens 5 % geringer als die entsprechende Abmessung der Konushülse 57 im Ausgangszustand.

Die Innenkonushülse 98 hat zwei separate Außenbereiche, zwischen denen sich eine umlaufende Rille befindet. Ein erster Außenbereich wirkt mit dem zylindrischen ersten Anlagebereich 28 zusammen, ein zweiter Außenbereich wirkt mit dem zylindrischen zweiten Anlagebereich 40 zusammen und richtet diesen relativ zum zylindrischen ersten Anlagebereich 28 aus, so dass nach erfolgter Zentrierung, siehe Figur 4, beide Anlagebereiche 28, 40 gleichachsig sind.

Um die Zentrierung zu erreichen, wird ein hydraulisches Zentrierwerkzeug 104 vorgesehen und benutzt. Es ist in Anlage an der vorderen Radialfläche 41. In diese Anlage wird es durch entsprechendes Drehen der Endmutter 92 belastet. Dadurch ist ein stationärer Teil des hydraulischen Zentrierwerkzeugs 104 festgelegt und mit den beiden Bauteilen 20, 32 verbunden.

Das hydraulische Zentrierwerkzeug 104 hat eine Aufnahme 106, die mit dem Haltemittel 102 der Innenkonushülse 98 zusammenwirkt. Es hat weiterhin einen Anschlussbereich 103, der mit dem Anschlussmittel 96 der Außenkonushülse 94 lösbar verbunden ist. Damit ist die Innenkonushülse 98 ortsfest den beiden Bauteilen 20, 42 zugeordnet, präziser gesagt ist ein Außenbereich des hydraulischen Zentrierwerkzeugs 104 ortsfest diesen beiden Bauteilen 20, 42 zugeordnet und gegenüber diesen festgelegt. Die Außenkonushülse 94 ist mit dem Innenteil des hydraulischen Zentrierwerkzeugs 104 verbunden und kann in axialer Richtung, und zwar in beiden Richtungen, verschoben werden.

Das Innenteil des hydraulischen Zentrierwerkzeug 104 weist einen Zentrierkolben 108 auf, der gegenüber dem Außenbereich geführt ist und bei seiner Bewegung entlang des zylindrischen Axialbereichs 88 gleitet. Der Zentrierkolben 108 ist mit zwei Räumen 110, 112 in Kontakt und kann durch Befüllen des ersten Raums 110 nach rechts und durch Befüllen des zweiten Raums 112 nach links relativ zum Außenbereich bewegt werden. Wird der zweite Raum 112 gefüllt, wird die Außenkonushülse 94 in der Figur nach links bewegt, dadurch wird die Innenkonushülse 98 gespreizt und erreicht die in Figur 4 gezeigte Position. Dabei wird die gewünschte Zentrierung durchgeführt.

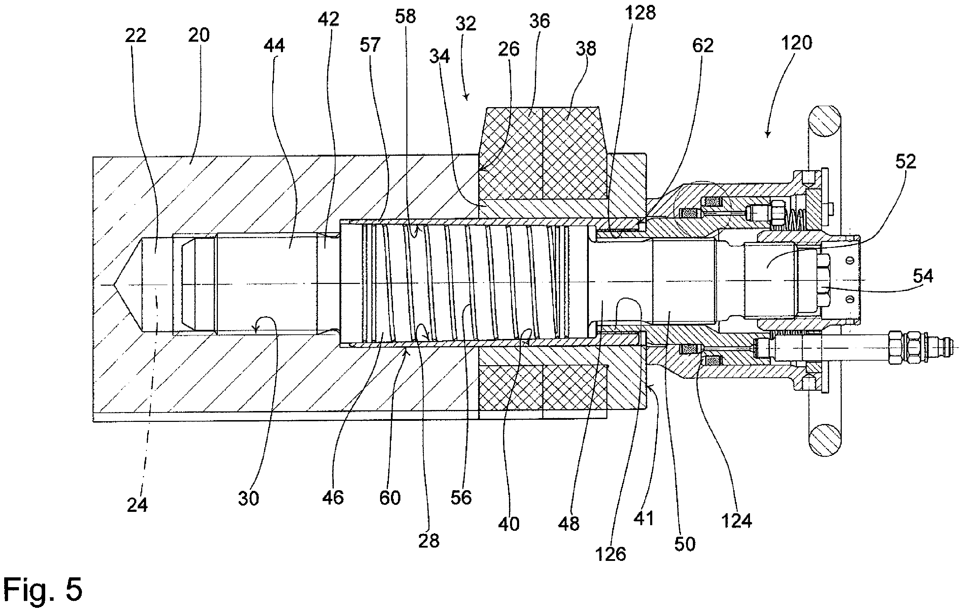

Figur 5 zeigt schließlich die Möglichkeit der Demontage. Hierfür ist ein hydraulisches Lösewerkzeug 120 vorgesehen. Dabei ist die Mutter 64 entfernt. Das Lösewerkzeug 120 stützt sich mit einem Außenteil an der vorderen Radialfläche 41 ab. Es hat einen Ringkolben 122, der durch Füllen eines Ölraums 124 in Figur 5 nach rechts bewegt werden kann. Der Ringkolben 122 hat ein Mitnahmegewinde 126, das mit einem Innengewindebereich 128 an einem vorderen Ende der Konushülse 57 in Eingriff ist. Wenn der Ölraum 124 unter Druck gesetzt wird, wird der Ringkolben 122 zusammen mit der Konushülse 57 nach rechts gezogen, dadurch wird die Konushülse 57 frei gezogen und wird die aufgebaute radiale Kraft abgebaut. Falls sich die Konushülse 57 nicht bewegen lässt, kann der Zwischenraum zwischen der Konushülse 57 und dem Kegelbereich 46 mit Öl unter Druck gefüllt werden, dies erfolgt über die beschriebene Ölbohrung.

Die hydraulische Spannvorrichtung ist für die demontierbare, reibschlüssige Verbindung eines ersten Bauteils 20 mit einem zweiten Bauteil 32 bestimmt. Das erste Bauteil 20 weist eine Hauptbohrung 22 und eine Kontaktfläche 26 auf. Die Hauptbohrung 22 hat einen zylindrischen ersten Anlagebereich 28 und ein hinteres Innengewinde 30. Das zweite Bauteil 32 liegt mit einer hinteren Radialfläche an der Kontaktfläche 26 an. Es weist einen zylindrischen zweiten Anlagebereich 40 und eine vordere Radialfläche 41 auf. Die hydraulische Spannvorrichtung weist zudem einen Kegelbolzen 42 auf, der ein hinteres Außengewinde 44, das dem hinteren Innengewinde 30 entspricht, einen Kegelbereich 46 und mindestens einen äußeren Gewindebereich 50, 52 hat. Die hydraulische Spannvorrichtung weist zudem eine Konushülse 57 auf, die eine innere Konusfläche 58 und eine äußere Radialfläche 62 hat. Sie weist weiterhin eine Mutter 64 auf, die auf den äußeren Gewindebereich 50, 52 aufgeschraubt ist. Sie hat eine mit der vorderen Radialfläche 41 zusammenwirkende Mutterfläche 68. Sie hat eine Anzahl von axialen Stiftbohrungen 72, in denen jeweils ein Druckstift 74 angeordnet ist. Die Druckstifte 74 kommen mit einem inneren Endbereich in Anlage an die äußere Radialfläche 62. Die hydraulische Spannvorrichtung weist zudem ein hydraulisches Spannwerkzeug 70 auf, das ein erstes Spannmittel 76 hat, welches eine axiale Spannkraft zwischen dem äußeren Gewindebereich und der vorderen Radialfläche 41 erzeugt, und das ein zweites Spannmittel 78 aufweist, das eine axiale Druckkraft auf die Druckstifte 74 erzeugt und sich am äußeren Gewindebereich 50, 52 abstützt.

### Bezugszeichenliste

- 20: erstes Bauteil
- 22: Hauptbohrung
- 24: Zentralachse
- 26: Kontaktfläche
- 28: zylindrischer erster Anlagebereich
- 30: hinteres Innengewinde
- 32: zweites Bauteil
- 34: Buchse
- 36,38: Membran
- 40: zylindrischer zweiter Anlagebereich
- 41: vordere Radialfläche
- 42: Kegelbolzen
- 44: hinteres Außengewinde
- 46: Kegelbereich
- 48: Zwischenbereich
- 50: erster äußerer Gewindebereich
- 52: zweiter äußerer Gewindebereich
- 54: Schraube
- 56: Nut
- 57: Konushülse
- 58: innere Konusfläche
- 60: äußere Zylinderfläche
- 62: äußere Radialfläche
- 64: Mutter
- 66: Innengewinde
- 68: Mutterfläche
- 70: Spannwerkzeug
- 72: Stiftbohrung
- 74: Druckstift
- 75: innerer Anlagebereich
- 76: erstes Spannmittel
- 78: zweites Spannmittel
- 80: erster Kolbenraum
- 82: zweiter Kolbenraum
- 84: Zentrierbolzen
- 86: hinteres Zentrieraußengewinde
- 88: zylindrischer Axialbereich
- 90: endseitiges Gewinde
- 92: Endmutter
- 94: Außenkonushülse
- 96: Anschlussmittel (von 94)
- 98: Innenkonushülse
- 100: Längsschlitz
- 102: Haltemittel
- 103: Anschlussbereich (für 96)
- 104: hydraulisches Zentrierwerkzeug
- 106: Aufnahme (für 102)
- 108: Zentrierkolben
- 110: 1. Raum
- 112: 2. Raum
- 120: hydraulisches Lösewerkzeug
- 122: Ringkolben
- 124: Ölraum
- 126: Mitnahmegewinde
- 128: Innengewindebereich

## Patentansprüche

1. Hydraulische Spannvorrichtung für die demontierbare, reibschlüssige Verbindung eines ersten Bauteils (20) mit einem zweiten Bauteil (32), wobei
- das erste Bauteil (20) eine Hauptbohrung (22) aufweist, die eine Zentralachse (24) definiert, wobei das erste Bauteil (20) eine Kontaktfläche (26) aufweist, die sich in einer Ebene rechtwinklig zur Zentralachse (24) und um die Mündung der Hauptbohrung (22) erstreckt, und wobei die Hauptbohrung (22) ausgehend von der Mündung einen zylindrischen ersten Anlagebereich (28) und dahinter ein hinteres Innengewinde (30) aufweist,
- das zweite Bauteil (32) mit einer hinteren Radialfläche an der Kontaktfläche (26) anliegt, einen zylindrischen zweiten Anlagebereich (40) aufweist, der denselben Durchmesser wie der erste Anlagebereich hat und mit diesem fluchtet, und eine vordere Radialfläche (41) aufweist,
und die Spannvorrichtung zudem aufweist
- einen Kegelbolzen (42), der in dieser Reihenfolge hintereinander angeordnet aufweist a) ein hinteres Außengewinde (44), das dem hinteren Innengewinde (30) entspricht, b) einen Kegelbereich (46), c) einen Zwischenbereich (48) und d) mindestens einen äußeren Gewindebereich (50, 52),
- eine Konushülse (57), die eine dem Kegelbereich (46) angepasste innere Konusfläche (58), eine äußere Zylinderfläche (60) und eine äußere Radialfläche (62) aufweist,
- eine Mutter (64), die ein Innengewinde (66) hat, das dem äußeren Gewindebereich (50, 52) entspricht, die eine mit der vorderen Radialfläche (41) zusammenwirkende Mutterfläche (68) hat, und die eine Anzahl von axialen Stiftbohrungen (72) aufweist, in denen jeweils ein Druckstift (74) angeordnet ist, welche Druckstifte (74) mit einem inneren Endbereich in Anlage an die äußere Radialfläche (62) kommen,
- mit einem hydraulischen Spannwerkzeug (70), das ein erstes Spannmittel (76) aufweist, welches eine axiale Spannkraft zwischen dem äußeren Gewindebereich (50, 52) und der vorderen Radialfläche (41) erzeugt, und das ein zweites Spannmittel (78) aufweist, das eine axiale Druckkraft auf die Druckstifte (74) erzeugt und sich am äußeren Gewindebereich (50, 52) abstützt.

2. Hydraulische Spannvorrichtung nach Anspruch 1, **dadurch gekennzeichnet, dass** die Hauptbohrung (22) eine Sackbohrung ist.

3. Hydraulische Spannvorrichtung nach einem der vorangehenden Ansprüche, **dadurch gekennzeichnet, dass** der Kegelbereich (46) sich in Richtung zum hinteren Außengewinde (44) erweitert.

4. Hydraulische Spannvorrichtung nach einem der vorangehenden Ansprüche, **dadurch gekennzeichnet, dass** die Konushülse (57) an ihrem vorderen Ende einen Innengewindebereich (128) aufweist, dass zwischen diesem Innengewindebereich (128) und dem Zwischenbereich (48) ein Ringraum frei bleibt, und dass dieser Ringraum von außen axial zugänglich ist.

5. Hydraulische Spannvorrichtung nach Anspruch 4, **dadurch gekennzeichnet, dass** die Spannvorrichtung weiterhin ein hydraulisches Lösewerkzeug (120) aufweist, das eine axiale Zugkraft zwischen dem Innengewindebereich (128) und der vorderen Radialfläche (41) bereitstellt.

6. Hydraulische Spannvorrichtung nach einem der vorangehenden Ansprüche, **dadurch gekennzeichnet, dass** das zweite Bauteil eine Buchse (34) und mindestens ein gespanntes Teil aufweist, das die Buchse (34), die vordere Radialfläche (41) und den zweiten Anlagebereich ausbildet, dass die Buchse (34) in das gespannte Teil eingesetzt ist, und dass das gespannte Teil die hintere Radialfläche ausbildet.

7. Hydraulische Spannvorrichtung nach einem der vorangehenden Ansprüche, **dadurch gekennzeichnet, dass** im gespannten Zustand zwischen der Kontaktfläche (26) und der Buchse (34) ein Luftspalt vorliegt, der beispielsweise kleiner als 0,5 mm ist, insbesondere kleiner 0,2 mm und vorzugsweise kleiner 0,05 mm ist, aber >0 ist.

8. Hydraulische Spannvorrichtung nach Anspruch 6 oder 7, **dadurch gekennzeichnet, dass** das gespannte Teil durch zwei Membranen (36, 38) gebildet ist, die nebeneinander auf der Buchse (34) angeordnet sind.

9. Hydraulische Spannvorrichtung nach einem der vorangehenden Ansprüche, **dadurch gekennzeichnet, dass** der Kegelbereich (46) eine Nut (56) für Öl aufweist.

10. Hydraulische Spannvorrichtung nach einem der vorangehenden Ansprüche, **dadurch gekennzeichnet, dass** die Spannvorrichtung weiterhin eine Zentriervorrichtung aufweist, die
- einen Zentrierbolzen (84) aufweist, der in dieser Reihenfolge hintereinander angeordnet aufweist a) ein hinteres Zentrieraußengewinde (86), das dem hinteren Innengewinde (66) entspricht, b) einen zylindrischen Axialbereich und c) ein endseitiges Gewinde (90),
- eine Außenkonushülse (94), die mit einer Innenbohrung auf dem Zentrierbolzen (84) gleitend geführt ist und ein Anschlussmittel (96) aufweist,
- eine Innenkonushülse (98) hat, die sich radial außerhalb der Außenkonushülse (94) befindet, die einen axialen Längsschlitz (100), ein Haltemittel (102) und eine der äußeren Zylinderfläche (60) entsprechende äußere Mantelfläche aufweist, und
- ein hydraulisches Zentrierwerkzeug (104) aufweist, das sich einerseits an der vorderen Radialfläche (41) und andererseits am endseitigen Gewinde (90) abstützt, eine Aufnahme (114) für das Haltemittel ausbildet und einen Anschlussbereich (103) aufweist, der mit dem Anschlussmittel (96) lösbar verbunden ist und der wahlweise in die eine oder in die andere axiale Richtung durch das hydraulische Zentrierwerkzeug (104) verschoben wird.

11. Hydraulische Spannvorrichtung nach einem der vorangehenden Ansprüche, **dadurch gekennzeichnet, dass** das erste Bauteil (20) ein Flansch ist, der eine Vielzahl von auf einem Teilkreis angeordneten Hauptbohrungen (22) aufweist.

12. Hydraulische Spannvorrichtung nach einem der vorangehenden Ansprüche, **dadurch gekennzeichnet, dass** das zweite Bauteil eine ringförmige Membran (36, 38) ist, die eine Vielzahl von auf einem Teilkreis angeordneten Löchern aufweist, in denen sich jeweils eine Buchse (34) befindet.

13. Hydraulische Spannvorrichtung nach einem der vorangehenden Ansprüche, **dadurch gekennzeichnet, dass** radiale Kraft zwischen der äußeren Zylinderfläche (60) und den zylindrischen Anlagebereichen (40, 52) im Bereich von 5 bis 20 % der axialen Kraft zwischen den beiden Bauteilen (20, 32) liegt.

14. Hydraulische Spannvorrichtung nach einem der vorangehenden Ansprüche, **dadurch gekennzeichnet, dass** die äußere Zylinderfläche (60) der Konushülse (57) mit einer die Reibung erhöhenden Beschichtung versehen ist, die insbesondere mit einem Haftreibungskoeffizienten größer 0,5, vorzugsweise größer 0,8 und insbesondere oberhalb von 1.

15. Hydraulische Spannvorrichtung nach einem der vorangehenden Ansprüche, **dadurch gekennzeichnet, dass** in einem ersten Schritt der Montage durch axiales Drücken die Konushülse (57) auf den Kegelbereich (46) geschoben und eine radiale Spannkraft aufgebaut wird, und dass anschließend der Kegelbolzen (42) in die Länge gezogen und eine axiale Vorspannkraft im Kegelbolzens (42) erzeugt wird.

## Claims

1. A hydraulic clamping device for the demountable frictionally engaged connection of a first component (20) to a second component (32), wherein
- the first component (20) has a main bore (22) defining a central axis (24), wherein the first component (20) has a contact surface (26) which extends in a plane perpendicular to the central axis (24) and around the mouth of the main bore (22), and wherein the main bore (22), starting from the mouth, has a cylindrical first abutting region (28) and, behind that, a rearward internal thread (30),
- the second component (32) abuts with a rear radial surface against the contact surface (26), has a cylindrical second abutting region (40), which has the same diameter as the first abutting region and is aligned therewith, and has a forward radial surface (41),
and the clamping device additionally has
- a conical bolt (42), which has, one behind the other in this order: a) a rearward external thread (44) corresponding to the rearward internal thread (30), b) a cone region (46), c) an intermediate region (48), and d) at least one outer threaded portion (50, 52),
- a cone sleeve (57) having an inner cone surface (58) adapted to the cone region (46), an outer cylinder surface (60) and an outer radial surface (62),
- a nut (64), which has an internal thread (66) corresponding to the outer threaded region (50, 52), which has a nut surface (68) cooperating with the forward radial surface (41), and which has a number of axial pin bores (72) in which one pressure pin (74) is in each case disposed, which pressure pins (74) abut with an inner end region against the outer radial surface (62),
- with a hydraulic clamping tool (70), which has a first clamping means (76) generating an axial clamping force between the outer threaded region (50, 52) and the forward radial surface (41), and which has a second clamping means (78) that generates an axial compressive force on the pressure pins (74) and is supported on the outer threaded region (50, 52).

2. The hydraulic clamping device according to claim 1, **characterized in that** the main bore (22) is a blind bore.

3. The hydraulic clamping device according to any one of the preceding claims, **characterized in that** the cone region (46) expands in the direction towards the rearward external thread (44).

4. The hydraulic clamping device according to any one of the preceding claims, **characterized in that** the cone sleeve (57) has at its forward end an internally threaded portion (128), that an annular space remains clear between this internally threaded portion (128) and the intermediate region (48), and that this annular space is axially accessible from the outside.

5. The hydraulic clamping device according to claim 4, **characterized in that** the clamping device further has a hydraulic detaching tool (120) providing an axial tensile force between the internally threaded portion (128) and the forward radial surface (41).

6. The hydraulic clamping device according to any one of the preceding claims, **characterized in that** the second component has a bushing (34) and at least one clamped part forming the bushing (34), the forward radial surface (41) and the second abutting region, that the bushing (34) is inserted into the clamped part, and that the clamped part forms the rearward radial surface.

7. The hydraulic clamping device according to any one of the preceding claims, **characterized in that** an air gap, which is, for example, smaller than 0.5 mm, in particular smaller than 0.2 mm and preferably smaller than 0.05, but >0, is provided between the contact surface (26) and the bushing (34) in the clamped state.

8. The hydraulic clamping device according to claim 6 or 7, **characterized in that** the clamped part is formed by two diaphragms (36, 38) disposed next to one another on the bushing (34).

9. The hydraulic clamping device according to any one of the preceding claims, **characterized in that** the cone region (46) has a groove (56) for oil.

10. The hydraulic clamping device according to any one of the preceding claims, **characterized in that** the clamping device further has a centering device, which
- has a centering bolt (84), which has, one behind the other in this order: a) a rearward external centering thread (86) corresponding to the rearward internal thread (66), b) a cylindrical axial region, and c) a thread (90) at the end,
- an outer cone sleeve (94), which is slidably guided with an internal bore on the centering bolt (84) and has a connecting means (96),
- an inner cone sleeve (98), which is located radially outside the outer cone sleeve (94), which has an axial longitudinal slit (100), a retaining means (102) and an outer lateral surface corresponding to the outer cylinder surface (60), and has
- a hydraulic centering tool (104), which is supported, on the one hand, on the forward radial surface (41) and, on the other hand, at the thread (90) at the end, forms a receiving portion (114) for the retaining means and has a connecting region (103), which is detachably connected to the connecting means (96) and which is selectively displaced in one or the other axial direction by the hydraulic centering tool (104).

11. The hydraulic clamping device according to any one of the preceding claims, **characterized in that** the first component (20) is a flange having a plurality of main bores (22) disposed on a partial circle.

12. The hydraulic clamping device according to any one of the preceding claims, **characterized in that** the second component is an annular diaphragm (36, 38) having a plurality of holes disposed on a partial circle, in which one bushing (34) is located in each case.

13. The hydraulic clamping device according to any one of the preceding claims, **characterized in that** a radial force between the outer cylinder surface (60) and the cylindrical abutting regions (40, 52) is in the range of 5 to 20% of the axial force between the two components (20, 32).

14. The hydraulic clamping device according to any one of the preceding claims, **characterized in that** the outer cylinder surface (60) of the cone sleeve (57) is provided with a friction-increasing coating, in particular with a static friction coefficient greater than 0.5, preferably greater than 0.8 and in particular greater than 1.

15. The hydraulic clamping device according to any one of the preceding claims, **characterized in that** in a first step of the assembly, by means of axial pressing, the cone sleeve (57) is pushed onto the cone region (46) and a radial clamping force is built up, and that then, the conical bolt (42) is drawn lengthwise and an axial biasing force is generated in the conical bolt (42).

## Revendications

1. Dispositif de tension hydraulique pour la liaison par friction démontable d'un premier composant (20) à un deuxième composant (32), dans lequel
- le premier composant (20) présente un alésage principal (22) qui définit un axe central (24), dans lequel le premier composant (20) présente une surface de contact (26) qui s'étend dans un plan perpendiculaire à l'axe central (24) et autour de la bouche de l'alésage principal (22), et dans lequel l'alésage principal (22) présente, à partir de la bouche, une première zone d'appui cylindrique (28) et derrière celle-ci un filetage intérieur arrière (30),
- le deuxième composant (32) s'appuie contre la surface de contact (26) par une surface radiale arrière, présente une deuxième zone d'appui cylindrique (40) qui a le même diamètre que la première zone d'appui et est alignée avec celle-ci, et comprend une surface radiale avant (41), et le dispositif de tension comprend en outre
- un boulon conique (42) qui comprend, disposés les uns derrière les autres dans cet ordre, a) un filetage extérieur arrière (44) qui correspond au filetage intérieur arrière (30), b) une zone conique (46), c) une zone intermédiaire (48) et d) au moins une zone filetée extérieure (50, 52),
- un manchon conique (57) qui présente une surface conique intérieure (58) adaptée à la zone conique (46), une surface cylindrique extérieure (60) et une surface radiale extérieure (62),
- un écrou (64) qui a un filetage intérieur (66) lequel correspond à la zone filetée extérieure (50, 52), qui a une surface d'écrou (68) agissant de concert avec la surface radiale avant (41), et qui présente un nombre d'alésages axiaux pour broche (72) dans chacun desquels est agencée une broche de pression (74), lesquelles broches de pression (74) viennent en appui, par une zone d'extrémité intérieure, contre la surface radiale extérieure (62),
- avec un outil de tension hydraulique (70) qui comprend un premier moyen de tension (76) lequel génère une force de tension axiale entre la zone filetée extérieure (50, 52) et la surface radiale avant (41), et qui comprend un deuxième moyen de tension (78) lequel génère une force de pression axiale sur les broches de pression (74) et prend appui sur la zone filetée extérieure (50, 52).

2. Dispositif de tension hydraulique selon la revendication 1, **caractérisé par le fait que** l'alésage principal (22) est un trou borgne.

3. Dispositif de tension hydraulique selon l'une quelconque des revendications précédentes, **caractérisé par le fait que** la zone conique (46) s'élargit en direction du filetage extérieur arrière (44).

4. Dispositif de tension hydraulique selon l'une quelconque des revendications précédentes, **caractérisé par le fait que** le manchon conique (57) comprend une zone filetée intérieure (128) à son extrémité avant, qu'un espace annulaire situé entre cette zone filetée intérieure (128) et la zone intermédiaire (48) reste libre, et que cet espace annulaire est accessible axialement de l'extérieur.

5. Dispositif de tension hydraulique selon la revendication 4, **caractérisé par le fait que** le dispositif de tension comprend en outre un outil de desserrage hydraulique (120) qui fournit une force de traction axiale entre la zone filetée intérieure (128) et la surface radiale avant (41).

6. Dispositif de tension hydraulique selon l'une quelconque des revendications précédentes, **caractérisé par le fait que** le deuxième composant comprend une douille (34) et au moins une partie tendue qui forme la douille (34), la surface radiale avant (41) et la deuxième zone d'appui, que la douille (34) est insérée dans la partie tendue et que la partie tendue forme la surface radiale arrière.

7. Dispositif de tension hydraulique selon l'une quelconque des revendications précédentes, **caractérisé par le fait que**, à l'état tendu, un intervalle d'air existe entre la surface de contact (26) et la douille (34), qui est, par exemple, inférieur à 0,5 mm, en particulier inférieur à 0,2 mm et de préférence inférieur à 0,05 mm, mais > 0.

8. Dispositif de tension hydraulique selon la revendication 6 ou 7, **caractérisé par le fait que** la partie tendue est constituée par deux membranes (36, 38) qui sont disposées l'une à côté de l'autre sur la douille (34).

9. Dispositif de tension hydraulique selon l'une quelconque des revendications précédentes, **caractérisé par le fait que** la zone conique (46) présente une rainure (56) pour l'huile.

10. Dispositif de tension hydraulique selon l'une quelconque des revendications précédentes, **caractérisé par le fait que** le dispositif de tension comprend en outre un dispositif de centrage qui
- comprend un boulon de centrage (84) qui présente, disposés les uns derrière les autres dans cet ordre, a) un filetage extérieur de centrage (86) arrière qui correspond au filetage intérieur arrière (66), b) une zone axiale cylindrique et c) un filetage côté extrémité (90),
- un manchon conique extérieur (94) qui est guidé à coulissement, par un alésage intérieur, sur ledit boulon de centrage (84) et qui comprend un moyen de raccordement (96),
- comprend un manchon conique intérieur (98) qui est situé radialement à l'extérieur du manchon conique extérieur (94), qui présente une fente longitudinale axiale (100), un moyen de maintien (102) et une surface latérale extérieure correspondant à la surface cylindrique extérieure (60), et
- comprend un outil de centrage hydraulique (104) qui prend appui sur la surface radiale avant (41) d'une part et sur le filetage côté extrémité (90) d'autre part, forme un logement (114) pour le moyen de maintien et présente une zone de raccordement (103) qui est reliée de manière amovible au moyen de raccordement (96) et qui, au choix, est déplacée dans l'un ou l'autre sens axial par l'outil de centrage hydraulique (104).

11. Dispositif de tension hydraulique selon l'une quelconque des revendications précédentes, **caractérisé par le fait que** le premier composant (20) est une bride qui comprend une pluralité d'alésages principaux (22) agencés sur un cercle partiel.

12. Dispositif de tension hydraulique selon l'une quelconque des revendications précédentes, **caractérisé par le fait que** le deuxième composant est une membrane annulaire (36, 38) qui comprend une pluralité de trous qui sont agencés sur un cercle partiel et dans chacun desquels se trouve une douille (34).

13. Dispositif de tension hydraulique selon l'une quelconque des revendications précédentes, **caractérisé par le fait qu'**une force radiale entre la surface cylindrique extérieure (60) et les zones d'appui cylindriques (40, 52) se situe dans la plage allant de 5 à 20 % de la force axiale entre les deux composants (20, 32).

14. Dispositif de tension hydraulique selon l'une quelconque des revendications précédentes, **caractérisé par le fait que** la surface cylindrique extérieure (60) du manchon conique (57) est munie d'un revêtement augmentant le frottement, en particulier avec un coefficient de frottement statique supérieur à 0,5, de préférence supérieur à 0,8 et en particulier supérieur à 1.

15. Dispositif de tension hydraulique selon l'une quelconque des revendications précédentes, **caractérisé par le fait que**, dans une première étape du montage, le manchon conique (57) est poussé par pression axiale sur la zone conique (46) et qu'une force radiale de tension est créée, et que, ensuite, le boulon conique (42) est tiré en longueur et qu'une force de précontrainte axiale est générée dans le boulon conique (42).
